# EUROPÄISCHE PATENTSCHRIFT

(11) **EP 2 504 118 B1**
(45) Veröffentlichungstag und Bekanntmachung des Hinweises auf die Patenterteilung: **13.01.2021**
(21) Anmeldenummer: 10782200.9
(22) Anmeldetag: 19.11.2010
(51) Int. Cl.: B23B 51/04, B23P 6/00

(54) **RECYCLINGVERFAHREN FÜR EINEN TIEFLOCHBOHRER**
RECONDITIONING METHOD FOR A DEEP HOLE DRILL
METHODE DE REPARATION POUR FORET POUR TROUS PROFONDS

(30) Priorität: 23.11.2009 US 263449 P
(43) Veröffentlichungstag der Anmeldung: 03.10.2012
(73) Patentinhaber: Oerlikon Surface Solutions AG, Pfäffikon, 8808 Pfäffikon (CH)
(72) Erfinder: EGGEMANN, Jens, 55452 Guldental (DE); BROSS, Detlev, 21629 Neu Wulmstorf (DE); PEYERL, Gerhard, 65366 Geisenheim (DE); SPRINGER, Klaus, 45701 Herten (DE)
(74) Vertreter: Kempkens, Anke
(86) Internationale Anmeldenummer: PCT/EP2010/007029
(87) Internationale Veröffentlichungsnummer: WO 2011/060947

(56) Entgegenhaltungen:
- WO-A1-2004/087356
- WO-A1-2006/084859
- WO-A1-2008/030177
- JP-A- 2005 118 906
- JP-A- 2006 082 206
- US-A1- 2005 244 236

## Beschreibung

Die vorliegende Erfindung betrifft ein Recyclingverfahren für einen Tieflochbohrer. WO 2008/030177 A offenbart ein Recyclingverfahren für einen Spiralbohrer, der eine erste Beschichtung im Bereich der Bohrerspitze und eine zweite Beschichtung in einem Führungsabschnitt des Bohrers aufweist, wobei das Recyclingverfahren folgende schritte umfasst:
(b) entfernen der zweiten Beschichtung mittels Nachschleifen,
(c) in einem dem Schritt (b) nachgängigen Schritt Beschichten des Bohrers mit einer weiteren Beschichtung.

Beschichtete Bohrer sind seit langem bekannt. Meistens wird mit der Beschichtung versucht, die Verschleissfestigkeit des Bohrers insbesondere im Bereich der Bohrerspitze zu erhöhen. Bei den beschichteten Bohrern handelt es sich dabei meistens um Spiralbohrer. Im Zusammenhang mit Spiralbohrern ist es unter anderem auch bekannt, den Schneidabschnitt vollständig, d.h. über den gesamten spiralförmig Bereich der Spannuten zu beschichten. Ziel einer solchen Beschichtung ist dann ein vereinfachter Transport der Späne sowie die Verschleissfestigkeit der Spitze.

Es sind Spiralbohrer bekannt, die zur Bohrung sehr tiefer Löcher verwendet werden können. Mit Tieflochbohrer sind aber im Rahmen der vorliegenden Beschreibung solche Bohrer gemeint, die gerade keine Spiralbohrer sind sondern eine im wesentlichen gerade Spannut zum Abtransport der Späne aufweisen.

Durch ein oder mehrere entlang der Bohrerachse im Bohrer verlaufende und an der Bohrerspitze endende Kühlkanäle wird oftmals ein Fluid, etwa ein Gas oder eine Flüssigkeit welche zur Kühlung dient und als Schmiermittel wirkt mit Hochdruck zur Bohrerspitze gepumpt, tritt aus der Bohrerspitze aus und wird im Wesentlichen entlang des Werkzeugs aus dem Loch herausgespült, wobei die die Späne mitgerissen werden. D.h. ein mittels Beschichtung verbesserter Transport der Späne ist nicht ernsthaft zu erreichen. Daher beschränken sich bisher bekannte Beschichtungen für Tieflochbohrer auf den Bereich der Bohrerspitze. Beispielsweise offenbart WO2004087356 einen Einlippenbohrer mit Funktionsbeschichtung. Die Funktionsbeschichtung hat dabei vor allem die Aufgabe den Verschleiss an den am Schnittprozess beteiligten Funktionsflächen zu vermindern.

Tiefbohrungen sind üblicherweise Bohrungen mit einem Durchmesser zwischen ca. 1mm bis 1500mm und einer Bohrtiefe ab ca. dem dreifachen Nenndurchmesser. Dabei wird unter anderem zwischen Einlippenbohrern und Zweilippenbohrern unterschieden. Ein wesentliches mit Tieflochbohrem verbundenes Charakteristikum besteht darin, dass sich Tieflochbohrer nicht, wie dies bei Spiralbohrern der Fall ist, durch eine möglichst zentrische Spitze an der Stirnseite zentrieren, sondern sich an den zylindrischen Mantelflächen der Bohrung ausrichten.

Dies bedeutet allerdings, dass der zur Führung des Bohrers verantwortliche Bereich des Tieflochbohrers eine erhebliche Rolle spielen kann. Zwar ist dieser Bereich nicht den extremen Belastungen wie sie bei der Bohrspitze auftreten ausgesetzt, allerdings tritt auch hier, insbesondere bei längerer Benutzung Verschleiß auf, welcher sich negativ auf das Bohrverhalten auswirkt.

Eine Lösung des Problems besteht darin den für die Führung des Bohrers verantwortlichen Bereich des Tieflochbohrers ebenfalls mit der Schicht, wie für die Bohrerspitze vorgesehen, zu überziehen. Dabei hat sich herausgestellt, dass es genügt, die Beschichtung der Bohrerspitze auf einen Bereich auszudehnen, der den Nenndurchmesser deutlich übersteigt und beispielsweise ca. dem achtfachen den Nenndurchmessers entspricht.

Dann allerdings steht man vor dem Problem, dass durch den erhöhten Verschleiß im Hauptfunktionsbereich die Verschleisßschutzschicht dort sehr viel schneller abgetragen sein wird als im Bereich der Führung. Während also im Hauptfunktionsbereich die Verschleißschutzschicht bereits stark angegriffen sein kann, ist es wahrscheinlich, dass im Bereich der Führung die Verschleissschutzschicht noch vollständig intakt ist. Wird nun ein zweites mal beschichtet, so wird über die noch vollständig intakte Schicht im Bereich der Führung beschichtet. Dies bringt eine Zunahme des Bohrdurchmessers in diesem Bereich mit sich, was nach einigen Zyklen im Bereich eines oder mehrerer Zehntel liegen kann. Um dies zu vermeiden kann der Tiefbohrer, bevor ein weiteres Mal die Verschleissschutzschicht aufgebracht wird, vollständig entschichtet werden. Entschichtungsverfahren um Verschleissschutzschichten zu entfernen sind aber aufwändig und greifen oftmals das Substrat selbst an. D.h. dass der Führungsbereich dann zwar nicht mehr durch den eigentlichen Bohrprozess angegriffen wird, diese kann aber, nach mehrmaligem Entschichten, aufgrund der aggressiven Verfahrens durchaus brüchig werden.

Es besteht daher das Bedürfnis nach einem Recyclingverfahren für einen Tieflochbohrer, wobei bei konstant guten Bohreigenschaften eine stabile Führung und eine stabile Schneidkante erhalten bleibt.

Die dementsprechende Aufgabe liegt der vorliegenden Erfindung zugrunde.

Die Aufgabe wird erfindungsgemäss durch Recyclingverfahren einen Tieflochbohrer mit den Merkmalen des Anspruchs 1 gelöst.

Nach dem erfindungsgemäßen Recyclingverfahren wird ein Tieflochbohrer bereitgestellt, welcher, ausgehend von der Bohrerspitze über einen Bereich, über den die Führungskante in Bezug auf Führung der Bohrerspitze effektiv ist, eine erste Beschichtung aufweist und eine zweite, von der ersten Beschichtung verschiedene Beschichtung nur in einem kleinen Bereich in der Umgebung der Spitze des Bohrers vorgesehen ist.

Vorzugsweise erstreckt sich die erste Beschichtung über einen Bereich, der ca. dem achtfachen des Nenndurchmessers des Bohrers entspricht. Nach Aufbringen der ersten Schicht wird die Spitze des Bohrers geschliffen um bereits beim ersten Nutzungszyklus nahezu identische Bedingungen wie bei den folgenden Nutzungszyklen herzustellen. Die zweite Beschichtung wird dann über einen Bereich erstreckt, der von der Bohrerspitze aus gemessen maximal dem Zweifachen des Nenndurchmessers des Bohrers entspricht.

Durch das erfindungsgemäße Recyclingverfahren wird ermöglicht, dass die zweite Schicht beim Nachschleifen im selben Arbeitsgang möglichst vollständig entfernt werden kann. Auf eine Entschichtung des gesammten Bohrers. Nach dem Schleifen wird lediglich wiederum die zweite Beschichtung aufgebracht.

Wie bereits erwähnt, ist die Anforderung an die erste Beschichtung, was Verschleissschutz betrifft, weitaus geringer als an die zweite Beschichtung, die ihre Wirkung an der Bohrerspitze entfaltet. Als erste Beschichtung kann daher eine Schicht bzw. ein Schichtsystem verwendet werden, welche neben den guten Verschleisseigenschaften beispielsweise zusätzlich eine Stabilisierung des Boherrücken zur Folge hat.

Die Erfindung wird im Folgenden anhand von Beispielen im Detail erläutert.

Im Beispiel 1 wird als erste Beschichtung ein gerade genuteter Einlippen-Tieflochbohrer mit einer 3µm dicken TiN Schicht beschichtet. Der Bohrer hat einen Nenndurchmesser von 6mm. Die TiN Beschichtung erstreckt sich über einen Bereich von 5cm, gemessen von der Bohrerspitze. Die TiN Schicht wurde mittels PVD aufgebracht. Als zweite Beschichtung wird eine TiAlN Schicht mittels PVD aufgebracht, welche sich auf einen Bereich von 8mm von der Bohrerspitze aus erstreckt.
Nach dem Einsatz wird der so beschichtete Bohrer nachgeschliffen und die zweite Schicht erneut auf die nun Schichtfreie Hauptfunktion mittels PVD aufgebracht. Dieser Zyklus kann sooft wiederholt werden wie es die Lebensdauer des Werkzeugs erlaubt.

### Beispiel 2

Im Beispiel 2 wird als erste Beschichtung ein gerade genuteter Zweilippen-Tieflochbohrer mit einer 4 µm dicken TiAlN Schicht beschichtet. Der Bohrer hat einen Nenndurchmesser von 8mm. Die TiAlN Beschichtung erstreckt sich über einen Bereich von 7cm, gemessen von der Bohrerspitze. Die TiAlN Schicht wurde mittels PVD aufgebracht. Als zweite Beschichtung wurde eine TiAlN Schicht aufgebracht, welche sich auf einen Bereich von 10mm von der Bohrerspitze aus erstreckt.
Nach dem Einsatz wird der so beschichtete Bohrer nachgeschliffen und lediglich die zweite Schicht erneut auf die nun Schichtfreie Hauptfunktion mittels PVD aufgebracht. Dieser Zyklus kann sooft wiederholt werden wie es die Lebensdauer des Werkzeugs erlaubt.

### Beispiel 3

Im Beispiel 3 wird als erste Beschichtung ein gerade genuteter Einlippen-Tieflochbohrer mit einer 4 µm dicken TiAIN Schicht beschichtet. Der Bohrer hat einen Nenndurchmesser von 8mm. Die TiAlN Beschichtung erstreckt sich über einen Bereich von 7cm, gemessen von der Bohrerspitze. Die TiAlN Schicht wurde mittels PVD aufgebracht. Als zweite Beschichtung wurde eine AITiN Schicht aufgebracht, welche sich auf einen Bereich von 10mm von der Bohrerspitze aus erstreckt.
Nach dem Einsatz wird der so beschichtete Bohrer nachgeschliffen und als zweite Schicht eine AlCrN Schicht auf die nun Schichtfreie Hauptfunktion mittels PVD aufgebracht. Dieser Zyklus kann mit einer variierenden 2. Schicht sooft wiederholt werden wie es die Lebensdauer des Werkzeugs erlaubt.

## Patentansprüche

1. Recyclingverfahren für einen Tieflochbohrer, wobei das Verfahren folgende Schritte umfasst:
(a) bereitstellen eines Tieflochbohrers welcher an den Bohrerspitze Verschleisserscheinungen aufweist, wobei der Tieflochbohrer zumindest eine im Wesentlichen geradlinige Spannut mit einer oder mehreren Schneiden und einen Führungsbereich welcher mindestens teilweise beschichtet ist aufweist, wobei der beschichtete Teil einen Führungsabschnitt definiert und der Führungsabschnitt über seine effektive Länge hinweg, ausgehend von der Bohrerspitze über einen Bereich, über den die Führungskante in Bezug auf Führung der Bohrerspitze effektiv ist, eine erste Beschichtung aufweist, wobei zusätzlich eine zweite Beschichtung nur in einem Bereich an der Spitze des Bohrers im Schneidbereich angebracht ist dessen Bereich sich über eine axiale Länge erstreckt, die maximal dem Zweifachen des Nenndurchmessers des Bohrers entspricht,wobei die zweite Beschichtung eine von der ersten Beschichtung verschiedene Beschichtung ist,
(b) entfernen der zweiten Beschichtung mittels nachschleifen,
(c) in einem dem Schritt (b) nachgängigen Schritt Beschichten des Tieflochbohrers mit einer weiteren Beschichtung, und wobei:
- im Schritt (b) mittels Nachschleifen ein schichtfreier Hauptfunktionsbereich des Tieflochbohrers entsteht, und
- im Schritt (c) der schichtfreie Hauptfunktionsbereich des Tieflochbohrers mit der weiteren Beschichtung beschichtet wird,
wobei die weitere Beschichtung der ursprünglich zweiten Beschichtung gleicht.

## Claims

1. Recycling method for a deep-hole drill, wherein the method comprises the following steps:
(a) providing a deep-hole drill which has symptoms of wear and tear on the drill tip, wherein the deep-hole drill has at least one essentially rectilinear flute with one or several cutting edges and a guide section that is at least partly coated, wherein the coated part defines a guide section, and the guide section comprises a first coating extending over its effective length, starting from the drill tip to an area over which the guide edge is effective with respect to the guidance of the drill tip, wherein additionally a second coating is applied only in an area at the tip of the drill in the cutting region and the region of which extends over an axial length that, at most, corresponds to double the nominal diameter of the drill, wherein the second coating is a coating which is different from the first coating;
(b) removing the second coating by means of re-sharpening;
(c) in a step subsequent to step (b), coating the deep-hole drill with a further coating, and wherein:
- in step (b), a layer-free main functional area of the deep-hole drill is created by re-sharpening, and
- in step (c), the layer-free main functional area of the deep-hole drill is coated with the further coating, wherein the further coating is the same as the original second coating.

## Revendications

1. Procédé de recyclage pour un foret pour trous profonds, le procédé comprenant les étapes suivantes:
(a) fournir un foret pour trous profonds qui montre des signes d'usure à la pointe du foret, le foret pour trous profonds ayant au moins une rainure essentiellement rectiligne avec une ou plusieurs lames et une zone de guidage qui est au moins partiellement revêtue, la partie revêtue définissant une section de guidage et la section de guidage ayant un premier revêtement sur sa longueur effective, à partir de la pointe du foret sur une zone sur laquelle l'arête de guidage est effective par rapport au guidage de la pointe du foret, de plus, un deuxième revêtement n'étant appliqué que dans une zone de la pointe du foret dans la plage de découpe, dont la zone s'étend sur une longueur axiale qui correspond au plus au double du diamètre nominal du foret, le deuxième revêtement étant un revêtement qui se diffère du premier revêtement,
(b) enlever le deuxième revêtement au moyen de réaffûtage,
(c) dans une étape postérieure à l'étape (b), revêtir le foret pour trous profonds d'un revêtement supplémentaire, et:
- dans l'étape b) une zone fonctionnelle principale sans couche du foret pour trous profonds étant créée au moyen de réaffûtage, et
- dans l'étape c) la zone fonctionnelle principale sans couche du foret pour trous profonds étant revêtue du revêtement supplémentaire, le revêtement supplémentaire étant identique au deuxième revêtement initial.
